(19) Europäisches Patentamt
European Patent Office
Office européen des brevets

(11) **EP 1 278 360 A1**

(12) **DEMANDE DE BREVET EUROPEEN**

(43) Date de publication:
**22.01.2003 Bulletin 2003/04**

(51) Int Cl.⁷: **H04M 19/04**

(21) Numéro de dépôt: 02077762.9

(22) Date de dépôt: **09.07.2002**

(84) Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(30) Priorité: **17.07.2001 FR 0109549**

(71) Demandeur: **Koninklijke Philips Electronics N.V.
5621 BA Eindhoven (NL)**

(72) Inventeurs:
• **Joncour, Yann
75008 Paris (FR)**
• **Lucat, Laurent
75008 Paris (FR)**

(74) Mandataire: **Chaffraix, Jean
Société Civile S.P.I.D.
156, Boulevard Haussmann
75008 Paris (FR)**

(54) **Adaptation du volume sonore d'un signal acoustique d'appel entrant en fonction d'un degré de confinement**

(57) L'invention concerne un récepteur de communication muni d'un haut-parleur et/ou d'un microphone et de moyens pour adapter automatiquement le volume du haut-parleur et/ou du microphone en fonction de l'environnement acoustique local du récepteur et en particulier du degré de confinement de l'environnement. Des moyens de détection de confinement sont prévus et comprennent des moyens de filtrage adaptatif pour modéliser le canal acoustique du récepteur à l'aide de la réponse impulsionnelle d'un filtre adaptatif et des moyens de calcul et de comparaison pour calculer un rapport de puissance entre une puissance partielle et la puissance totale de ladite réponse impulsionnelle pour la comparer à des valeurs de référence et pour en déduire une estimation dudit degré de confinement.
Application : téléphonie mobile.

FIG.3

**Description**

L'invention concerne un récepteur téléphonique comprenant des moyens d'émission pour émettre un signal sonore ayant un niveau sonore variable et des moyens de réglage dudit niveau sonore. L'invention concerne également un procédé de réglage dudit niveau sonore. Elle concerne aussi un programme d'ordinateur pour mettre en oeuvre ce procédé. L'invention a de nombreuses applications notamment dans les récepteurs radio téléphoniques.

La demande de brevet internationale publiée sous le numéro WO9905850 décrit une méthode de contrôle automatique de niveau sonore pour contrôler le niveau sonore d'une sonnerie de téléphone en fonction de caractéristiques de l'environnement local du téléphone. Le document fait des hypothèses sur le signal de sonnerie et prévoit des moyens pour modifier des caractéristiques de ce signal en fonction de l'environnement local.

Un objet de l'invention est de fournir des moyens pour ajuster le niveau sonore du signal émis par un récepteur téléphonique permettant à un utilisateur d'entendre ce signal lorsque le récepteur est situé dans un espace confiné, par exemple, à l'intérieur d'un sac, en définissant un degré de confinement de l'environnement local du récepteur.

Pour cela, il est prévu un récepteur du genre mentionné dans le paragraphe introductif, comportant des moyens de détection de confinement pour détecter un degré de confinement de l'environnement local du récepteur et des moyens de contrôle desdits moyens de réglage pour commander l'ajustement dudit niveau sonore en fonction du résultat de la détection.

Selon une caractéristique importante de l'invention, les moyens de détection de confinement comprennent des moyens de filtrage adaptatif pour modéliser le canal acoustique du récepteur à l'aide de la réponse impulsionnelle d'un filtre adaptatif et des moyens de calcul et de comparaison pour calculer un rapport de puissance entre une puissance partielle et la puissance totale de ladite réponse impulsionnelle pour la comparer à des valeurs de référence et pour en déduire une estimation dudit degré de confinement.

La description suivante, donnée à titre d'exemple non limitatif pour illustrer comment l'invention peut être réalisée, est faite en regard des dessins ci-annexés, parmi lesquels :

- la figure 1 est un schéma représentant un récepteur selon l'invention situé dans un environnement local confiné,
- la figure 2 est un organigramme pour illustrer un exemple de procédé selon l'invention,
- la figure 3 est un schéma bloc fonctionnel montrant un exemple de réalisation d'un récepteur selon l'invention,
- la figure 4 est un diagramme représentant des résultats de tests expérimentaux.

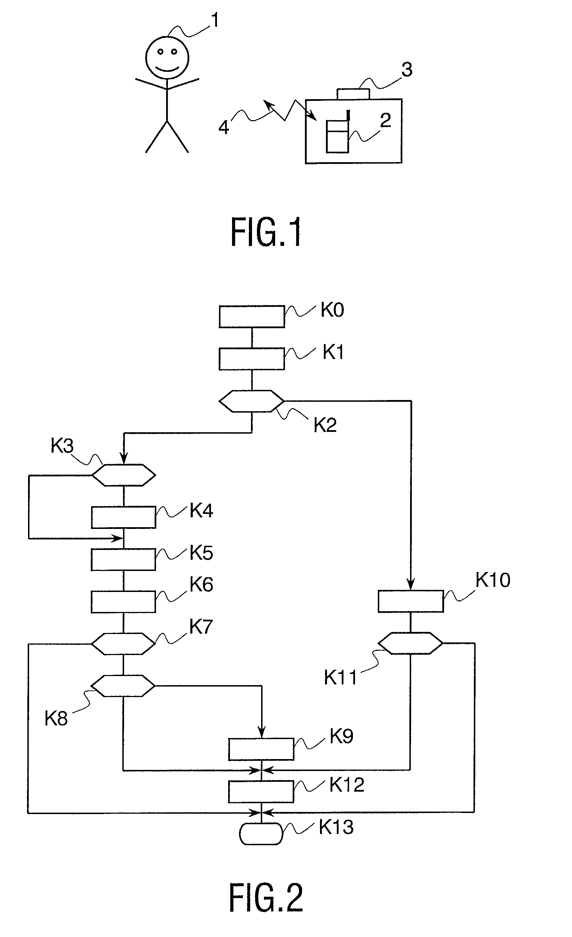

La figure 1 représente un utilisateur 1 et un récepteur téléphonique 2 situé dans un environnement confiné représenté par un cartable 3. Lorsque l'utilisateur reçoit un appel, dit appel entrant, le récepteur lui indique cet appel entrant en émettant un signal sonore 4 au moyen d'un haut parleur. Ce signal peut être tout type de signal sonore tel qu'une sonnerie, un message vocal, une musique, etc. Dans la situation illustrée par la figure 1, le récepteur téléphonique est localisé dans un espace limité plus ou moins fermé où le son se propage mal vers l'extérieur et vers l'intérieur. Selon l'invention, ce type d'environnement est appelé un environnement confiné.

Deux problèmes majeurs peuvent se poser lorsque le récepteur est localisé dans un environnement confiné. Un premier problème se pose au moment de l'émission du signal d'appel sonore indiquant un appel entrant. En effet, le son se propageant mal vers l'extérieur, l'utilisateur risque de ne pas entendre le signal sonore émis par le récepteur et de manquer un appel entrant. Un deuxième problème se pose au moment du décrochage de l'appel, lorsque le récepteur est équipé d'un dispositif à commande vocale permettant à l'utilisateur de décrocher son téléphone et d'entamer une communication à l'aide de commandes vocales préenregistrées sans prendre son récepteur en main et donc sans le sortir de son environnement local d'origine. Le dispositif à commande vocale comprend un microphone situé dans le récepteur pour capter le signal de commande vocale. Dans un environnement confiné tel que celui illustré à la figure 1 où les sons se propagent mal de l'extérieur vers l'intérieur, le microphone risque de ne pas percevoir le signal de commande vocale de l'utilisateur et donc de ne pas déclencher le décrochage de l'appel.

La figure 2 illustre un procédé selon l'invention pour permettre à un utilisateur de recevoir et de décrocher un appel sur son récepteur téléphonique lorsque celui-ci est situé dans un environnement confiné, par exemple, dans un sac, un tiroir, une poche profonde ou fermée, etc. Le procédé comporte les étapes suivantes :

- une étape K0 de réception d'appel pour recevoir un appel entrant,
- une étape K1 de notification de l'appel avec en parallèle une évaluation de l'environnement local acoustique du récepteur,
- une étape K2 de détection de confinement pour détecter le degré de confinement de l'environnement local,

  - si le résultat de l'étape de détection K2 indique que l'environnement local est confiné, le procédé se poursuit avec une étape K3 pour vérifier si le mode de décrochage par commande vocale est activé.

- Si le mode de décrochage par commande vocale est activé, le procédé se poursuit à l'étape K4, pour augmenter le volume en émission, puis à l'étape K5 pour augmenter le volume en réception, sinon, le procédé passe directement à l'étape K5.
- L'étape K6 indique que le récepteur continue d'émettre un signal d'appel sonore avec les modifications de volume.
- A l'étape suivante K7, un test est effectué pour savoir si l'appel est accepté ou rejeté par l'utilisateur :

  - si l'appel est rejeté, le procédé se termine à l'étape K13,
  - sinon, il se poursuit à l'étape K8 pour réitérer un test sur le degré de confinement de l'environnement local car l'utilisateur pourrait avoir sorti le récepteur de l'environnement local dans lequel il était au début du procédé.

    - Si l'environnement local est confiné, le procédé se poursuit directement à l'étape K12 pour continuer la communication, puis K13 pour la terminer,
    - Sinon il passe par l'étape K9, pour réinitialiser automatiquement les volumes sonores à des niveaux prédéterminés par l'utilisateur et correspondant à une utilisation normale lorsque l'utilisateur et le récepteur sont situés dans le même environnement local, puis se poursuit avec les étapes K12 et K13.

- Si le résultat de l'étape de détection K2 indique que l'environnement local n'est pas confiné, le procédé se poursuit à l'étape K10 pour continuer à émettre le signal sonore avec les paramètres de niveaux sonores de référence préenregistrés par le fabriquant ou par l'utilisateur.
- L'étape suivante K11 est identique à l'étape K7, sauf que si l'appel est accepté, il n'est pas utile en général de refaire un test de confinement, le procédé passe alors à l'étape K12 puis se termine à l'étape K13.

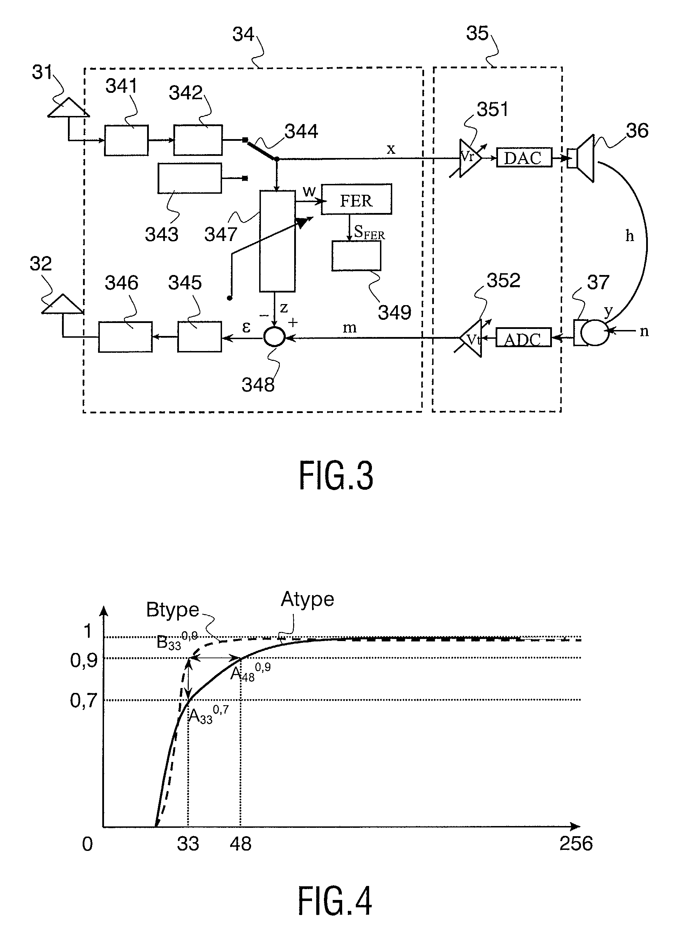

La figure 3 est un exemple de réalisation d'un récepteur selon l'invention. Il comprend une antenne de réception 31, une antenne d'émission 32, un bloc de traitement numérique du signal 34, par exemple implémenté à l'aide d'un processeur de type DSP (de l'anglais Digital Signal Processor), un bloc de codage / décodage audio 35, un haut-parleur 36 et un microphone 37. Le bloc de codage / décodage audio 35 effectue les conversions analogique / numérique ADC et numérique / analogique DAC ainsi que la quantification du signal ainsi numérisé. Le bloc de traitement numérique du signal 34 comprend, en réception : un bloc de décodage de canal 341, un bloc de décodage de source 342, un bloc de génération de mélodies 343, un interrupteur 344, et en émission : un bloc de codage de source 345, un bloc de codage de canal 346.

Lorsque le récepteur reçoit un appel, l'antenne de réception 32 reçoit un signal de notification d'appel entrant qui doit être décodé successivement par le décodeur de canal 341 et le décodeur de source 342. Si le mode de signal d'appel choisi est du type mélodie, l'interrupteur 344 peut basculer pour être relié au générateur de mélodie 343 en vue de générer une mélodie préenregistrée en guise de signal sonore indiquant à l'utilisateur un appel entrant. Le signal de notification d'appel entrant, appelé signal reçu et noté x, est alors transmis au bloc de codage / décodage audio 35 pour être décodé puis transmis au haut-parleur 36. Le signal reçu x est transformé par un amplificateur 351, en un signal ayant un volume sonore prédéterminé par l'utilisateur ou le fabricant, avant d'être converti en un signal analogique par le convertisseur digital / analogique DAC, puis émis par le haut-parleur 36 sous la forme d'un signal sonore, noté h. Une version filtrée, notée y, du signal h émis par le haut-parleur est capturée par le microphone 37 du fait du couplage acoustique existant entre le haut-parleur et le microphone, situés généralement à une distance faible l'un de l'autre dans un récepteur de petite taille. Le signal h émis par le haut-parleur représente la réponse impulsionnelle du couplage acoustique entre haut-parleur et le microphone. Cette réponse impulsionnelle h peut être déterminée par un annuleur d'écho acoustique réalisé dans le bloc de traitement du signal DSP, par exemple, par un filtre adaptatif 347, un soustracteur 348, un bloc de calcul FER et un bloc de contrôle de volume 349.

Le microphone 37 capte également un signal additionnel, dit signal utile, correspondant à la voix de l'utilisateur appelé, présent notamment lorsque le mode "commande vocale" est activé, éventuellement additionné de bruit. Ce signal additionnel est noté n. Le signal transmis par le microphone 37 au bloc de traitement numérique DSP est noté m. Il correspond à la somme des signaux y et n. Le signal m, converti par le convertisseur analogique / numérique ADC, est amplifié par un amplificateur 352 selon un niveau de volume déterminé par le bloc de contrôle de volume 349. Le signal m transmis au bloc de traitement du signal DSP représente l'écho acoustique introduit par le couplage acoustique entre le haut-parleur et le microphone. L'annuleur d'écho permet de supprimer cet écho.

La détection du degré de confinement correspondant aux étapes K2 et K8 du procédé selon l'invention décrit à la figure 2 peut avantageusement être réalisée, par exemple, à l'aide de l'annuleur d'écho présent dans le bloc de traitement numérique du signal DSP. Selon un mode de réalisation avantageux décrit ci-dessous, les caractéristiques de l'environnement acoustique local du récepteur qui sont déterminées par l'annuleur d'écho sont utilisées pour effectuer la détection de confinement. En effet, le couplage acoustique entre le haut-parleur 36 et le microphone 37 dépendent de la localisation du récepteur, c'est-à-dire de son environnement acoustique local. Par exemple, la réponse impulsionnelle du canal acoustique est plus longue dans un environnement local ouvert constitué d'une vaste pièce dans laquelle le récepteur est simplement posé sur une table que dans un environnement local fermé constitué d'un sac à main dans lequel le récepteur est enfermé. Le type d'environnement local acoustique confiné / ouvert, ainsi que le degré de confinement de l'environnement local peuvent être déterminés par une estimation du couplage acoustique réalisé dans le récepteur.

Selon l'invention, cette estimation est réalisée à l'aide du filtre adaptatif 347 utilisé dans l'annuleur d'écho pour modéliser le canal acoustique du récepteur. Le filtre adaptatif 347 reçoit en entrée le signal reçu x, correspondant à la notification d'appel entrant. Il délivre en sortie un signal, noté z, qui est soustrait au signal d'écho m transmis par le microphone 37, pour obtenir un signal d'erreur $\varepsilon$. Les coefficients du filtre adaptatif 347 sont adaptés à partir du signal d'erreur $\varepsilon$, selon un algorithme récursif tel que l'algorithme des moindre carrés normalisé, aussi appelé NLMS (de l'anglais Normalized Least Mean Square), décrit dans le document de S. Haykin, "Adaptive Filter Theory. Third Edition," des éditions Prentice Hall, 1996. Cet algorithme permet de mettre à jour les coefficients du filtre adaptatif pour minimiser l'erreur $\varepsilon$. Après adaptation des coefficients du filtre, la réponse impulsionnelle du filtre, notée w, qui représente une modélisation du canal acoustique, a convergé vers la réponse impulsionnelle du couplage acoustique h entre le haut-parleur et le microphone. Cela permet de déterminer le couplage acoustique existant entre le haut-parleur et le microphone et ainsi de caractériser l'environnement local acoustique du récepteur. Lorsque les coefficients du filtres sont adaptés, l'erreur $\varepsilon$ est annulée, la valeur de z est pratiquement égale à m et w=h.

Selon un mode de réalisation préféré de l'invention, la réponse impulsionnelle du couplage acoustique h entre le haut-parleur et le microphone est caractérisée à l'aide d'un rapport d'énergies entre une partie de l'énergie de la réponse impulsionnelle w du filtre adaptatif 347 et l'énergie totale de la réponse impulsionnelle w du filtre. Ce rapport, noté FER (k), peut, par exemple, être défini par l'équation (1) suivante :

$$FER(k) = \frac{\sum_{i=0}^{k} w^2(i)}{\sum_{i=0}^{L-1} w^2(i)} \qquad (1)$$

où k et i sont des indices correspondant aux coefficients du filtre adaptatif 341 et L est la longueur de la réponse impulsionnelle du filtre. Le rapport FER (k) représente le rapport entre l'énergie d'un segment de la réponse impulsionnelle du filtre adaptatif entre les coefficients 1 et k du filtre et l'énergie totale de la réponse impulsionnelle du filtre. Le type d'environnement local peut alors être déterminé en calculant le rapport d'énergies FER($k_0$) pour un indice de coefficient de filtre prédéterminé, noté $k_0$, et en comparant ce rapport à des valeurs de référence. Plus l'environnement local est confiné, plus la valeur du rapport d'énergies FER($k_0$) est proche de 1. Ces calculs d'énergies sont effectuées par le bloc de calcul FER. Il reçoit en entrée la réponse impulsionnelle w du filtre adaptatif 347 et délivre en sortie un signal de commande $S_{FER}$. Le signal de commande $S_{FER}$ est représentatif du rapport d'énergies FER($k_0$). Il est destiné à commander le bloc de contrôle de volume 349. Le rapport d'énergie calculé FER($k_0$) détermine le résultat de la détection du degré de confinement de l'environnement local du récepteur selon les étapes K2 et K8 décrites à la figure 2. Le signal de contrôle de volume $S_{FER}$ commandé par le bloc de calcul FER indique au bloc de contrôle de volume 349 d'augmenter ou de baisser le volume sonore des signaux émis par le haut-parleur 36 et/ou captés par le microphone 37, selon la procédure décrite aux étapes K4 et K5 de la figure 2.

La figure 4 montre des résultats de tests expérimentaux réalisés dans deux environnement acoustiques différents. Les tests ont été réalisés avec un récepteur téléphonique radio mobile du type décrit à la figure 3 muni d'un filtre adaptatif à 256 coefficients. Le récepteur a été préalablement configuré pour émettre un signal sonore d'appel entrant sous la forme d'une mélodie synthétisée par modulation de fréquences. La figure 4 représente deux courbes illustrant le rapport d'énergies FER(k) défini à l'équation (1) en fonction d'un index k représentant le nombre d'échantillons utilisés au numérateur de l'équation (1).

La courbe en gras représente le rapport d'énergies FER(k) observé dans un environnement local, dit de type A, ouvert ou non confiné, constitué d'une pièce vaste meublée d'une table sur laquelle le récepteur est posé. La courbe en pointillés représente le rapport d'énergies FER(k) observé dans un environnement local, dit de type B, confiné constitué d'un sac dans lequel le récepteur est enfermé.

Sur chaque courbe, deux points sont indiqués par une double flèche horizontale et une double flèche verticale. La double flèche horizontale indique un point sur chaque courbe, notés $B_{33}^{0.9}$ et $A_{48}^{0.9}$, qui représentent un rapport d'énergies FER identique et égal à 0.9 pour les deux points, pour un indice $k_0$=33 (courbe de type B) et 48 (courbe de type A) respectivement. La double flèche verticale indique un point sur chaque courbe, dont le point $B_{33}^{0.9}$ et un point

$A_{33}^{0.7}$, représentant des rapports d'énergies de 0.9 (courbe de type B) et 0.7 (courbe de type A) respectivement pour un même indice $k_0$=33. Les points indiqués par les deux doubles flèches sont représentatifs de la différence de couplage acoustique entre les environnements de type A et B. La double flèche horizontale montre que 33 ou 48 coefficients de filtre concentrent 90% de l'énergie totale de la réponse impulsionnelle du filtre adaptatif, selon que l'environnement local du récepteur est de type B ou A respectivement. La double flèche verticale montre que les 33 premiers coefficients du filtre concentrent 70% ou 90% de l'énergie totale de la réponse impulsionnelle du filtre adaptatif selon que l'environnement local du récepteur est de type A ou B respectivement. Au moins deux modes de réalisation du détecteur de degré de confinement selon l'invention peuvent être déduits de ce graphique.

Selon un premier mode de réalisation, la détection du degré de confinement est effectuée dans le bloc de calcul FER en comparant la valeur de l'indice k, pour un rapport d'énergies FER(k) égal à 0.9, à des valeurs de référence comprises, par exemple, entre 33 et 48 et correspondant à des environnements acoustiques ayant des degrés de confinement décroissants, allant du type B au type A.

Selon un deuxième mode de réalisation, la détection du degré de confinement est effectuée dans le bloc de calcul FER en calculant le rapport d'énergies FER(k) pour un indice donné, par exemple $k_0$=33, et en le comparant à des valeurs de référence comprises, par exemple, entre 0.7 et 0.9 et correspondant à des environnements acoustiques ayant des degrés de confinement croissants allant du type A au type B.

Le signal $S_{FER}$ transmis au bloc de contrôle de volume 349 contient une information sur le degré de confinement calculé par le bloc de calcul FER. Cette information, notée $FER(k_0)$, ainsi que d'autres informations telles que une information de volume spécifiée par le constructeur, notée $V_{DET}$, et une information prédéfinie par l'utilisateur, notée $V_{USERr}$, sont utilisées par le bloc de contrôle 343 pour régler les niveaux de volume $V_r$ et $V_t$ des amplificateurs 351 et 352, respectivement, selon les équations suivante :

$$V_r = \max(V_{USER} + f(FER(k_0), V_{max}^{(1)}) \qquad (2)$$

$$V_t = \max(V_{DET} + g(FER(k_0), V_{max}^{(2)}) \qquad (3)$$

où f et g peuvent notamment être des fonctions discrètes et où $V_{max}^{(1)}$ et $V_{max}^{(2)}$ sont des valeurs maximum prédéfinies. A titre d'exemple de réalisation, la fonction f peut avoir la forme simple suivante :

$$f(FER(k_0)) = \begin{cases} 0 \, for FER(k_0) < 0.9 \\ 1 \, for FER(k_0) \geq 0.9 \end{cases} \qquad (4)$$

On a ainsi décrit et illustré à l'aide d'exemples un récepteur, un procédé, un programme d'ordinateur et un signal pour adapter automatiquement le volume du haut-parleur et du microphone dans un récepteur de communication, en fonction de l'environnement acoustique local du récepteur et en particulier de son degré de confinement. D'autres exemples de réalisation peuvent aisément être dérivés des modes décrits sans sortir du cadre de l'invention. En particulier, l'invention n'est pas limitée au type de signal traité : décrochage par reconnaissance vocale, notification d'appel entrant, etc. ni à la nature du signal mélodie, voix, etc.

**Revendications**

1. Récepteur téléphonique comprenant des moyens d'émission (36) pour émettre un signal sonore ayant un niveau sonore variable et des moyens de réglage (351) dudit niveau sonore, **caractérisé en ce qu'**il comporte des moyens de détection de confinement (347; FER) pour détecter un degré de confinement de l'environnement local du récepteur et des moyens de contrôle (349) desdits moyens de réglage pour commander l'ajustement dudit niveau sonore en fonction du résultat de la détection.

2. Récepteur selon la revendication 1, dans lequel lesdits moyens de détection de confinement (347; FER) comprennent des moyens de filtrage adaptatif (347) pour modéliser le canal acoustique du récepteur à l'aide de la réponse impulsionnelle (w) d'un filtre adaptatif et des moyens de calcul et de comparaison (FER) pour calculer un rapport de puissance (FER(k)) entre une puissance partielle et la puissance totale de ladite réponse impulsionnelle pour la comparer à des valeurs de référence et pour en déduire une estimation dudit degré de confinement.

3. Procédé d'ajustement de niveau sonore d'un signal émis par un récepteur téléphonique **caractérisé en ce qu'**il comporte une étape de détection de confinement (K2;K8) pour détecter un degré de confinement de l'environnement local du récepteur et une étape de réglage (K4; K5) pour ajuster ledit niveau sonore en fonction du résultat de la détection.

4. Procédé selon la revendication 3, dans lequel l'étape de détection de confinement comprend une étape de filtrage adaptatif pour modéliser le canal acoustique du récepteur à l'aide de la réponse impulsionnelle d'un filtre adaptatif et une étape de calcul et de comparaison pour calculer un rapport de puissance entre une puissance partielle et la puissance totale de ladite réponse impulsionnelle pour la comparer à des valeurs de référence et pour en déduire une estimation dudit degré de confinement.

5. Programme d'ordinateur comportant des instructions de code de programme pour mettre en oeuvre le procédé selon la revendication 4.

6. Signal pour transporter un programme d'ordinateur selon la revendication 5.

FIG.1

FIG.2

FIG.3

FIG.4

**Office européen des brevets**

## RAPPORT DE RECHERCHE EUROPEENNE

Numéro de la demande

EP 02 07 7762

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 1 047 258 A (LUCENT TECHNOLOGIES INC) 25 octobre 2000 (2000-10-25) * abrégé * * colonne 2, ligne 55 - colonne 3, ligne 7 * | 1-6 | H04M19/04 |
| X | US 6 246 761 B1 (CUDDY DAVID ROBERT) 12 juin 2001 (2001-06-12) * le document en entier * | 1-6 | |
| A | US 5 870 684 A (HOASHI YUKI ET AL) 9 février 1999 (1999-02-09) * abrégé * | 1-6 | |

**DOMAINES TECHNIQUES RECHERCHES (Int.Cl.7)**

H04M

Le présent rapport a été établi pour toutes les revendications

| Lieu de la recherche | Date d'achèvement de la recherche | Examinateur |
|---|---|---|
| LA HAYE | 17 octobre 2002 | Montalbano, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.** EP 02 07 7762

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-10-2002

| Document brevet cité au rapport de recherche | | Date de publication | Membre(s) de la famille de brevet(s) | | Date de publication |
|---|---|---|---|---|---|
| EP 1047258 | A | 25-10-2000 | US | 6363265 B1 | 26-03-2002 |
| | | | AU | 2770500 A | 26-10-2000 |
| | | | BR | 0001573 A | 19-12-2000 |
| | | | CA | 2303719 A1 | 19-10-2000 |
| | | | CN | 1271229 A | 25-10-2000 |
| | | | EP | 1047258 A2 | 25-10-2000 |
| | | | JP | 2000324207 A | 24-11-2000 |
| US 6246761 | B1 | 12-06-2001 | WO | 9905850 A1 | 04-02-1999 |
| US 5870684 | A | 09-02-1999 | JP | 9186744 A | 15-07-1997 |
| | | | AU | 724182 B2 | 14-09-2000 |
| | | | AU | 7643896 A | 03-07-1997 |
| | | | CN | 1168615 A ,B | 24-12-1997 |
| | | | GB | 2308785 A ,B | 02-07-1997 |

EPO FORM P0459

Pour tout renseignement concernant cette annexe : voir Journal Officiel de l'Office européen des brevets, No.12/82